# FASCICULE DE BREVET EUROPEEN

(11) **EP 0 130 117 B1**
(45) Date de publication et mention de la délivrance du brevet: **15.04.1987**
(21) Numéro de dépôt: 84401262.5
(22) Date de dépôt: 19.06.1984
(51) Int. Cl.: C09K 11/06

(54) **Matériau luminescent comportant une matrice solide à l'intérieur de laquelle est réparti un composé fluorescent, son procédé de préparation et son utilisation dans une photopile**
Lumineszentes Material bestehend aus einer Matrize mit einer inwendig verteilten fluoreszenten Verbindung, dessen Herstellung und Verwendung in einem Photoelement
Luminescent material having a solid matrix with a luminescent compound distributed inside, process for its manufacture and its use in a photopile

(30) Priorité: 23.06.1983 FR 8310406
(43) Date de publication de la demande: 02.01.1985
(73) Titulaire: CENTRE NATIONAL DE LA RECHERCHE SCIENTIFIQUE (CNRS), 75700 Paris (FR)
(72) Inventeur: Cazeau-Dubroca, Claudie, F-33420 Talence (FR); Peirigua, Agnès, F-33610 Gazinet (FR); Cazeau, Philippe, F-33420 Talence (FR)
(74) Mandataire: Mongrédien, André

## Description

La présente invention a pour objet de nouveaux matériaux luminescents à base de composés organiques qui sont susceptibles de présenter une torsion interne entraînant un état excité par transfert de charge au plus bas niveau fluorescent.

Depuis quelques années, on a effectué des recherches sur différentes molécules organiques et on a découvert que certaines molécules en solution dans des solvants polaires pouvaient donner lieu à un phénomène de double fluorescence lorsqu'elles avaient une structure susceptible de présenter une torsion interne et de conduire à un transfert de charge.

Des molécules de ce type sont en particulier décrites par W. Rettig dans Journal of Luminescence, 26 (1980), p. 21-46 ; G. Wermuth et coll. dans Ber. Bunsenges. Phys. Chem. 85 (1981), p. 64-70 ; Z.R. Grabowski et coll. dans Pure et Appl. Chem., vol. 55, n° 2, p. 245-252, (1983) et Rettig et coll. Chem. Phys., Letters, Vol. 87, n° 3, (1982), p. 229-234.

Ces molécules peuvent être par exemple des N-arylcarbazoles comme il est décrit par M. Zander dans « ZEITSCHRIFT FOR NATURFORSCHUNG », vol. 24A, n° 2, février 1969, p. 254-256. Elles peuvent aussi être constituées par la p-(9-anthryl)-diméthylaniline et ses dérivés, la p-(9-anthryl)-m,m'-diméthyl N-N-diméthylaniline, la 5-(9-anthryl)-1-méthyl-indoline, la p-diméthylamino-acétophénone ou la 4-diméthyla- minopyridine, comme il est indiqué par Z.R. Grabowski dans « JOURNAL OF LUMINESCENCE », vol. 18/19, n° 1, janvier 1979, pages 420-424, North-Holland Publishing Company.

. On explique généralement le phénomène de double fluorescence de composés de ce type par le fait que la molécule à l'état excité peut se transformer par rotation interne d'un groupe tel que le groupe -N(alkyle)₂. Ainsi, cet état excité correspond à un conformère qui a un caractère important de transfert de charge et on dénommera ci-après cet état excité à torsion interne et à transfert de charge sous le terme «TlCT ».

A la suite d'études portant sur ces molécules en solution dans différents solvants, on a constaté que l'apparition de l'état excité était favorisée par des interactions dipôle-dipôle avec le solvant et par un abaissement de la viscosité de la solution. Aussi, jusqu'à présent, on n'avait pas envisagé d'inclure de telles molécules dans des matrices solides.

On a toutefois envisagé de réaliser des dispositifs amplificateurs d'énergie rayonnante adaptables à une photopile en disposant dans une matrice en matière synthétique des hydrocarbures aromatiques ou d'autres substances fluorescentes à rendement quantique élevé tels que la rhodamine B, la fluorescéine, l'a-naphtol, le benzène, le naphtalène, l'anthracène et le pentacène, comme il est décrit dans le brevet FR-A-2 346 858.

La présente invention a précisément pour objet un matériau luminescent comprenant une matrice solide dans laquelle est réparti un composé organique de ce type.

Le matériau, selon l'invention, comprend une matrice dans laquelle est réparti un composé organique susceptible de présenter par torsion interne un état excité à transfert de charge, et il se caractérise en ce que ladite matrice est une matrice solide comportant des groupements capables de former des liaisons hydrogène et en ce qu'il comprend au moins 15 .10 -⁵ % en poids dudit composé organique.

Grâce au choix de la matrice solide, le matériau de l'invention présente la particularité d'avoir des caractéristiques de fluorescence améliorées par rapport à celles que l'on obtient avec le même composé organique en solution.

Ainsi, il y a une interaction entre la matrice solide et le composé organique inclus, et cette interaction permet l'obtention de propriétés améliorées, c'est-à-dire un rendement de fluorescence et une durée de vie considérablement accrus par rapport à ceux que l'on obtient lorsque les molécules du composé organique sont en solution. Ceci provient d'une conformation différente des molécules dans la matrice solide à l'état fondamental, du fait de la liaison hydrogène.

Toutefois, cette interaction ne peut être obtenue qu'avec certains matériaux, car on a pu mettre en évidence qu'elle provenait de l'établissement de liaisons hydrogène avec la matrice. Aussi, selon l'invention, il est indispensable que le matériau de la matrice comporte des groupements capables de former des liaisons hydrogène, par exemple des groupements -SH, -NH ou -OH.

Ce matériau peut être en particulier un polymère ou copolymère obtenu par exemple à partir d'alcools, d'amines, d'amides, d'acides, d'esters, d'époxydes et/ou de thiols.

A titre d'exemples de tels polymères, on peut citer l'alcool polyvinylique, les polyamides, en particulier les produits commercialisés sous la marque nylon, les polyesters et les polyépoxydes.

Le matériau de la matrice peut aussi être une substance minérale, par exemple un verre, un sel hydraté.

Le matériau de la matrice peut être transparent ou non. Cependant, pour certaines applications il est nécessaire d'utiliser un matériau transparent.

Selon l'invention, les composés organiques (TICT) susceptibles d'être utilisés, sont des dérivés disubstitués du benzène, des dérivés substitués de l'anthracène, du phénantrène ou du naphtalène, des dérivés substitués de la pyridine, ou encore des composés polycycliques à cycles juxtaposés ou ramifiés comportant éventuellement un ou plusieurs hétéro-atomes tels que N.

Selon un premier mode de réalisation de l'invention, le composé organique répond à la formule : 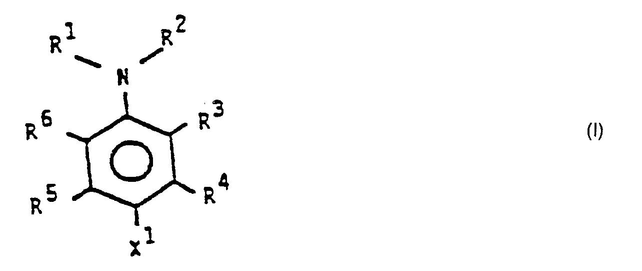 dans laquelle R¹ et R² qui peuvent être identiques ou différents, représentent un radical alkyle ; R³, R⁴, R⁵ et R⁶ qui peuvent être identiques ou différents, représentent un atome d'hydrogène, un atome d'halogène, un radical alkyle ou un radical alcoxy ; et X¹ représente ―C≡N, ―COOR. 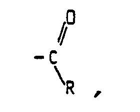 -N0₂ ou 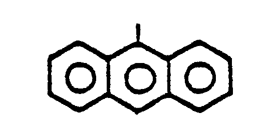 avec R représentant un atome d'hydrogène ou un radical alkyle ; ou dans laquelle N, R¹ et R² forment ensemble un radical cyclique choisi parmi : 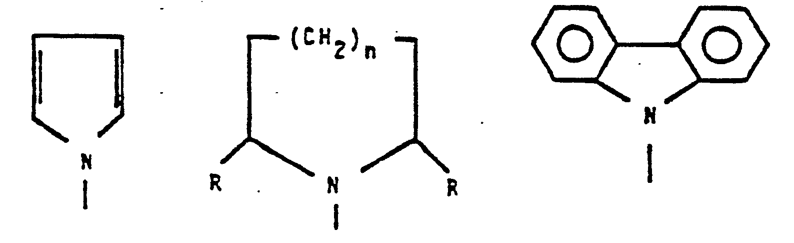 avec R représentant un atome d'hydrogène ou un radical alkyle et n étant égal à 2 ou 3.

A titre d'exemple de composés de ce type, on peut citer les composés répondant aux formules suivantes :

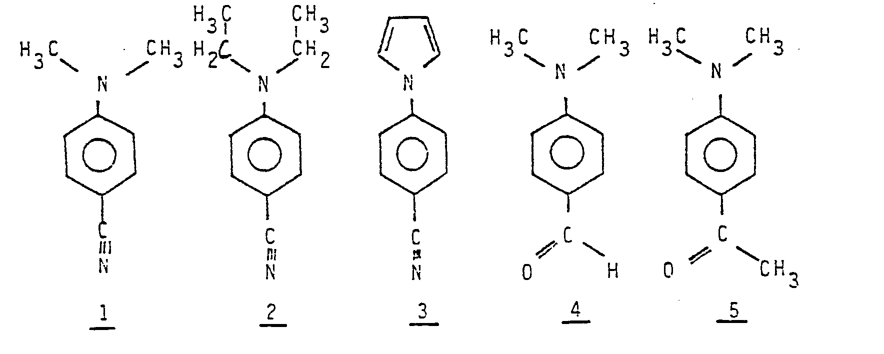

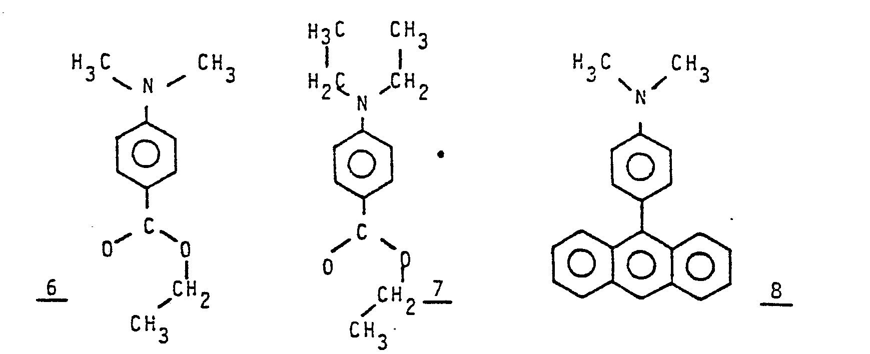

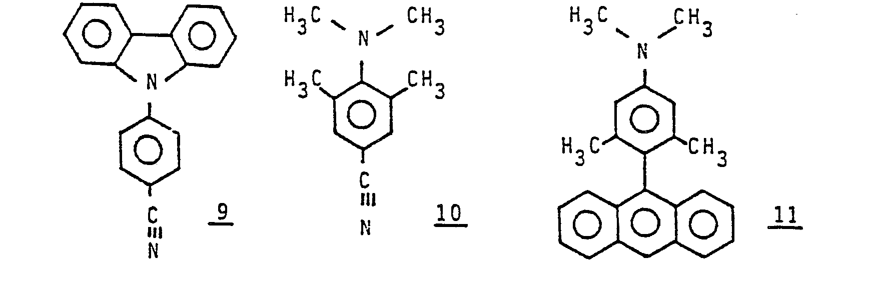

Selon un second mode de réalisation de l'invention, le composé organique est un dérivé du naphtalène répondant à la formule : 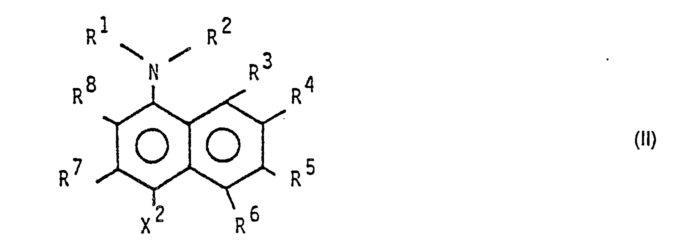 dans laquelle R¹ et R² qui peuvent être identiques ou différents, représentent un radical alkyle ; R³, R⁴, R⁵, R⁶, R⁷ et R⁸ qui peuvent être identiques ou différents, représentent un atome d'hydrogène, un atome d'halogène, un radical alkyle ou un radical alcoxy ;
et X² représente un atome d'hydrogène, -CN, -COOR, 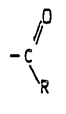 ―NO₂OU 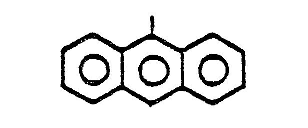 avec R représentant un atome d'hydrogène ou un radical alkyle ; ou dans laquelle N, R¹ et R² peuvent aussi former ensemble un radical cyclique choisi parmi : 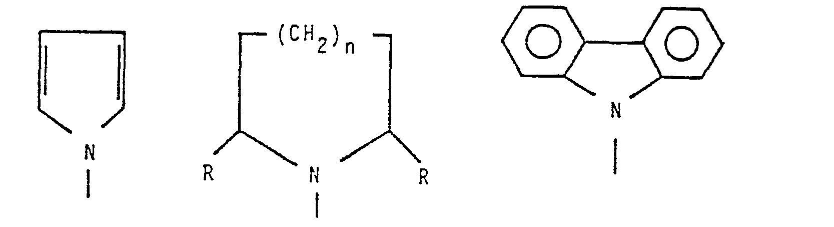 avec R représentant un atome d'hydrogène ou un radical alkyle et n étant égal à 2 ou 3 à condition que X² ne représente pas un atome d'hydrogène lorsque R¹ et R² sont des alkyles.

A titre d'exemple de composés de ce type, on peut citer les composés répondant aux formules suivantes :

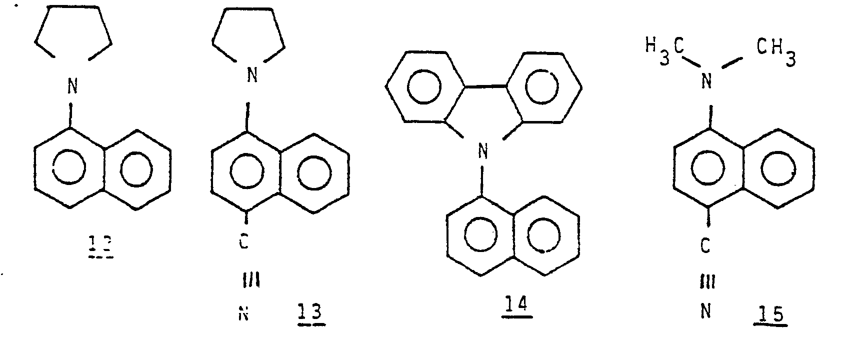

Selon un troisième mode de réalisation de l'invention, le composé organique est un dérivé d'anthracène répondant à la formule : 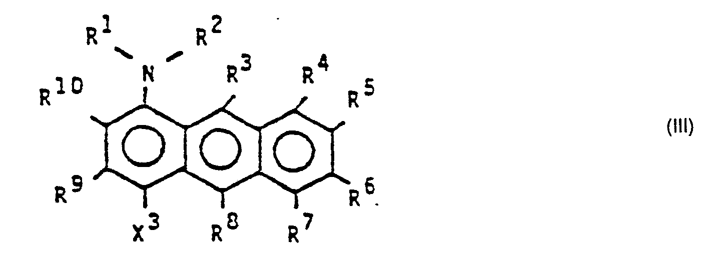 dans laquelle R¹ et R² qui peuvent être identiques ou différents, représentent un radical alkyle ; R³, R⁴, _{R}5, _{R}⁶, R⁷, R⁸, R⁹ et R¹⁰ qui peuvent être identiques ou différents, représentent un atome d'hydrogène, un atome d'halogène, un radical alkyle ou un radical alcoxy ; et X³ représente un atome d'hydrogène, ―CN. -COOR, 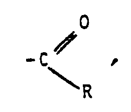 -NO₂ ou 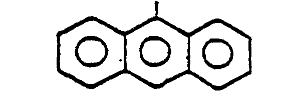 avec R représentant un atome d'hydrogène ou un radical alkyle ; ou dans laquelle N, R¹ et R² peuvent former ensemble un radical cyclique choisi parmi : 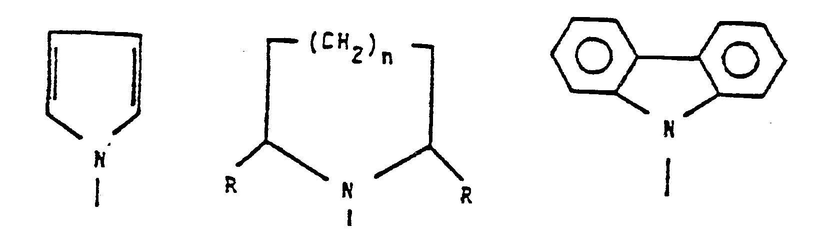 avec R représentant un atome d'hydrogène ou un radical alkyle et n étant égal à 2 ou 3 à condition que X³ ne soit pas un atome d'hydrogène lorsque R¹ et R² sont des alkyles.

Selon un quatrième mode de réalisation de l'invention, le composé organique est un dérivé répondant à la formule : 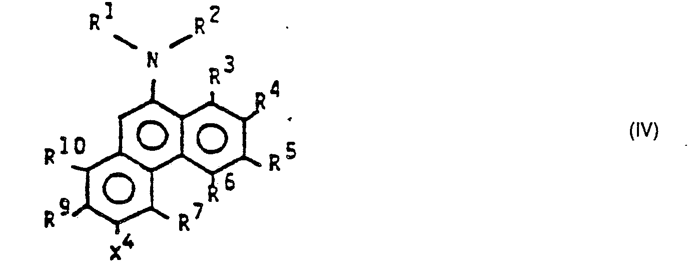 dans laquelle R¹ et R² qui peuvent être identiques ou différents, représentent un radical alkyle ; R³, R⁴, R⁵, R⁶, R⁷, R⁹ et R¹⁰ représentant un atome d'hydrogène, un atome d'halogène, un radical alkyle ou un i radical alcoxy ; X⁴ représente un atome d'hydrogène, -CN, -COOR, 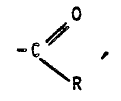 ou N0₂ avec R représentant un atome d'hydrogène ou un radical alkyle, ou dans laquelle N, R¹ et R² forment ensemble un radical cyclique choisi parmi : 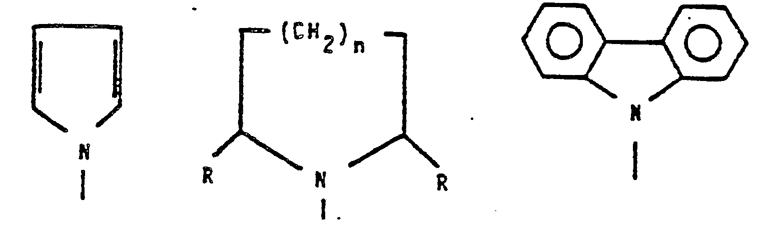 avec R représentant un atome d'hydrogène ou un radical alkyle et n étant égal à 2 ou 3 à condition que X⁴ ne soit pas l'hydrogène lorsque R¹ et R² sont des alkyles.

A titre d'exemple de tels composés, on peut citer le composé de formule : 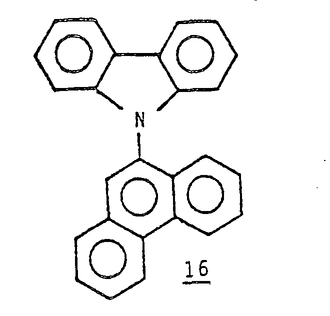 Selon l'invention, on peut encore utiliser des composés répondant aux formules : 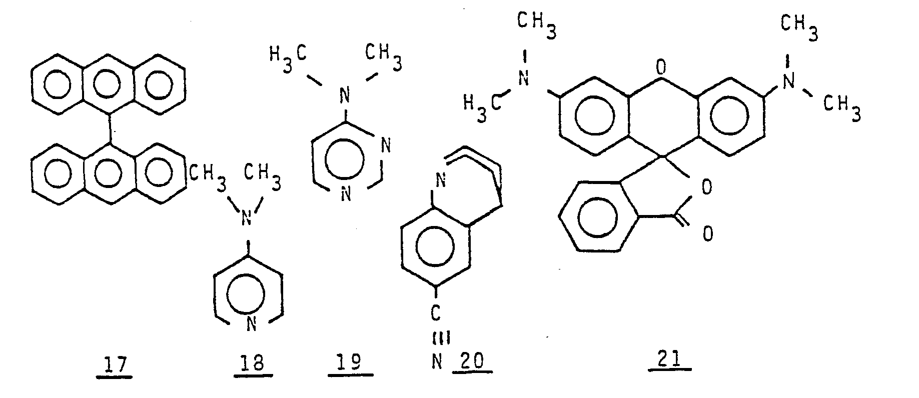 ou leurs dérivés substitués par un alkyle ou un alkoxy.

Les radicaux alkyle ou alkoxy utilisés comme substituants dans les composés organiques décrits ci- dessus ont de 1 à 4 atomes de carbone.

Selon l'invention, tout ou partie des atomes d'hydrogène du composé organique peuvent être remplacés par des atomes de deutérium.

De même, on peut inclure dans la matrice solide des atomes lourds tels que le deutérium et l'iode, introduits sous forme d'eau lourde ou d'iodure d'alkyle.

En effet, la présence d'atomes lourds renforce l'effet TICT.

On peut aussi provoquer un effet bathochrome de la fluorescence TICT par adjonction de traces d'un solvant polaire tel que l'acétonitrile.

Aussi, selon une caractéristique avantageuse de l'invention, le matériau luminescent comprend des traces d'au moins un composé choisi dans le groupe comprenant l'eau lourde, les iodures d'alkyle et les solvants polaires.

Les composés organiques utilisés dans l'invention sont des composés connus qui peuvent être préparés par des procédés classiques. En particulier, on peut préparer ces composés en utilisant le procédé donné par H. Suhr, LIEBIGS Annalen, 687 (1965).

Pour préparer le matériau de l'invention, on introduit le composé organique dans la matrice, soit lors de la préparation ou de la mise en forme de la matrice, soit après mise en forme par adsorption du composé dans la matrice à partir d'une solution de ce composé, suivie d'une évaporation du solvant de la solution. On peut encore introduire le composé dans la matrice par des techniques par voie sèche, par exemple en phase vapeur.

Généralement, le matériau luminescent de l'invention est sous la forme d'un film mince déposé sur un substrat. Les substrats utilisés peuvent être réalisés en métal, en matière plastique, en verre, en céramique ou autre ; généralement ils sont en verre.

De préférence, selon l'invention, lorsque la matrice est en polymère ou en copolymère, on introduit le composé organique du type TICT lors de la formation du film de polymère ou copolymère. Dans ce cas, le procédé consiste :
a) à préparer une solution du polymère ou copolymère formant la matrice et du composé organique par dissolution dans un solvant,
b) à mettre la solution sous la forme d'un film par dépôt sur un support approprié, et
c) à sécher le film ainsi déposé pour évaporer le solvant.

Généralement, le solvant est un mélange d'eau et d'un solvant organique miscible à l'eau, par exemple un mélange d'eau et d'éthanol lorsque le polymère formant la matrice est de l'alcool polyvinylique.

On peut mettre la solution sous la forme d'un film par application au pinceau, ou par tout autre procédé classique. La durée du séchage qui est généralement effectué à la température ambiante, est fonction de l'épaisseur du film de polymère ou copolymère, et elle passe de 1 heure à 48 heures lorsque l'épaisseur du film augmente de 20 µrn à 1 mm.

Dans certains cas, notamment pour la réalisation de matériaux utilisables dans des photopiles, on oriente toutes les molécules du composé organique dans le même sens ; ceci peut être réalisé lors du séchage du film sous un champ électrique.

Les matériaux de l'invention peuvent trouver de nombreuses applications. En effet, lorsque ces matériaux sont exposés à un faisceau lumineux ayant une longueur d'onde qui correspond à la bande d'absorption du composé organique inclus dans la matrice, ceux-ci donnent deux émissions lumineuses Fa et Fb de longueurs d'ondes différentes lorsqu'ils sont éclairés, et seule la seconde émission Fa de plus grande longueur d'onde subsiste lorsque l'éclairage cesse.

Selon la nature du composé inclus, la première émission peut être située ou non dans le visible, mais la deuxième émission est généralement située dans le visible. Ainsi, dans le cas des dérivés du benzène, la première émission est dans le domaine de l'ultraviolet alors que, dans le cas des dérivés du naphtalène et de l'anthracène, on obtient deux émissions toutes deux situées dans le domaine visible mais ayant des couleurs et des durées de vie différentes.

A titre d'exemple, lorsqu'on éclaire un matériau constitué par un film d'alcool polyvinylique contenant un composé du type TICT par une lampe de Wood d'une puissance de 150 W avec une raie excitatrice dans le domaine ultraviolet, on peut obtenir une luminescence d'un bleu très intense (450 nm) d'un vert (550 nm) ou d'un rouge orangé (600 nm) suivant la nature du composé inclus. La durée de vie radiative _{Tn} de cette émission est de plusieurs secondes et la durée de vie d'apparition _{Tr} de cette émission est sensiblement de 1 s.

Ces durées de vie Tᵣ et T_{z} sont très grandes pour des fluorescences et elles permettent une excitation non continue, ce qui est favorable pour économiser l'énergie. Ceci peut aussi convenir à un éclairage clignotant, si l'intervalle de temps d'excitation est bien calculé.

Le caractère très intense de l'émission, sa longue durée de vie, l'écart énergétique important entre l'absorption et l'émission TICT, la transparence du matériau en l'absence d'excitation spécifique peuvent, par ailleurs, être utilisés pour la réalisation de fibres optiques et de panneaux dans la publicité, dans l'audiovisuel, la décoration, etc... On peut aussi utiliser les propriétés de tels matériaux afin de mettre en valeur certains points en éclairage normal et/ou en lumière noire.

De plus, les matériaux de l'invention présentent des propriétés photoconductrices, ce qui les rend utilisables pour la réalisation de cellules photoélectriques. Par ailleurs, ils peuvent être utilisés comme matériaux actifs dans des photopiles, par exemple, pour convertir l'énergie solaire en énergie électrique lorsqu'on a orienté les molécules TICT du film au moyen d'un champ électrique.

D'autres caractéristiques et avantages de l'invention apparaîtront mieux à la lecture de la description qui suit, donnée bien entendu à titre illustratif et non limitatif en référence au dessin annexé sur lequel :
la figure 1 représente le spectre d'absorption de différents matériaux dont l'un seulement correspond à l'invention,
la figure 2 représente le spectre de fluorescence de différents matériaux luminescents dont l'un seulement correspond à l'invention,
la figure 3 représente le spectre d'émission d'un second matériau selon l'invention, et
la figure 4 représente le spectre d'émission d'un troisième matériau selon l'invention.

### Exemple 1

Cet exemple illustre la préparation d'un matériau comportant une matrice d'alcool polyvinylique de formule 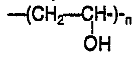 à l'intérieur de laquelle est réparti un composé organique constitué par le para N,N-diméthylaminobenzonitrile (DMABN), soit le composé n° 1.

On mélange 90 cm³ d'eau et 10 cm³ d'éthanol contenant 10-² moi - 1-¹ de DMABN et on porte à l'ébullition ; on ajoute alors 10 g d'alcool polyvinylique constitué par le produit vendu sous la marque Rhodoviol 33S par la société Rhône-Poulenc et on maintient l'ébullition tout en agitant, pendant 20 min. On étend ensuite la solution au pinceau sur un substrat en verre et on laisse sécher pendant 1 heure, ce qui conduit à l'obtention d'une couche de matériau luminescent ayant une épaisseur d'environ 50 µm. On lave ensuite le film avec du chlorure de n-butyle, puis on le sèche.

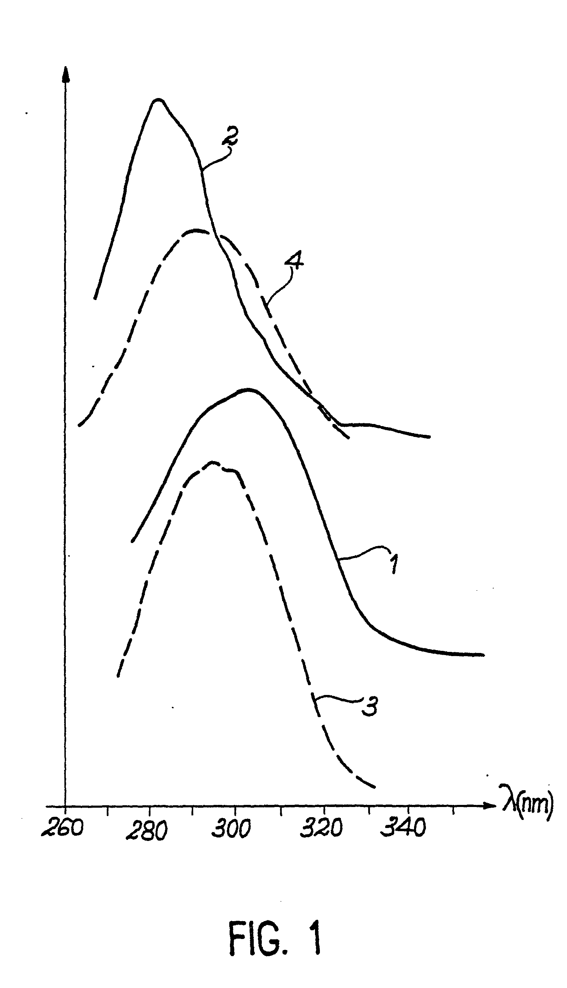

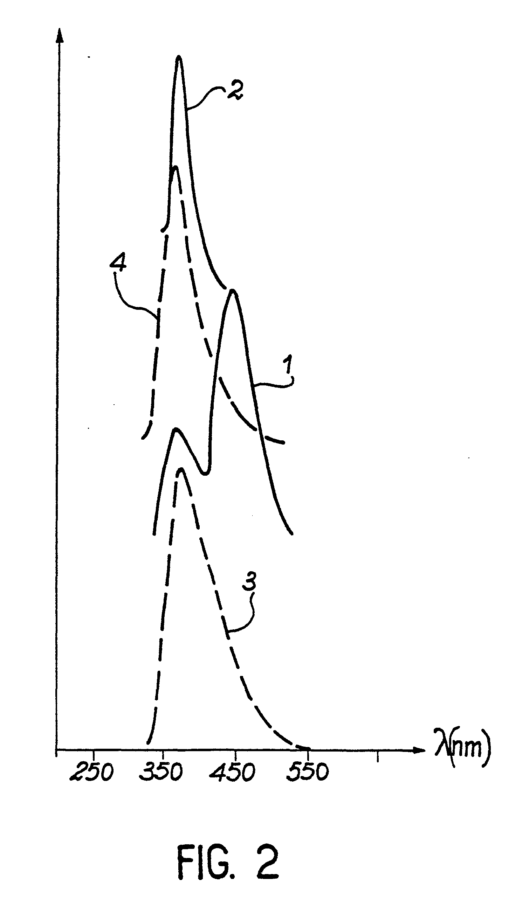

On détermine ensuite le spectre d'absorption de ce matériau sur un spectromètre du type Cary 118 Varian, ainsi que le spectre d'émission sous excitation de 310 nm sur un spectrofluorimètre Aminco-Bowman. Les courbes 1 des figures 1 et 2 illustrent respectivement le spectre d'absorption et le spectre d'émission de ce composé n° 1.

### Exemple 2

Cet exemple concerne la préparation d'un matériau comportant une matrice en polyéthylène, c'est-à-dire en polymère ne comportant pas de groupe capable de former des liaisons hydrogène, dans laquelle est dispersé le même composé organique DMABN. On part d'un film de polyéthylène ayant une épaisseur de 50 µm et on introduit le DMABN dans cette matrice par la technique par voie sèche, c'est-à-dire en mettant en contact le film avec de la vapeur de DMABN à la température ambiante.

On détermine comme dans l'exemple 1, le spectre d'absorption et le spectre d'émission du matériau ainsi obtenu. Les courbes 2 des figures 1 et 2 illustrent les résultats obtenus.

### Exemple 3

On prépare un matériau luminescent dont la matrice est constituée par du chlorure de polyvinyle, qui contient le même composé organique DMABN.

Dans ce cas, on part d'un film de chlorure de polyvinyle ayant une épaisseur de 17 µm et on introduit le DMABN dans cette matrice par adsorption à partir d'une solution à 10-² mol, |―1 de ce composé dans du chlorure de n-butyle, puis on évapore le solvant. On lave ensuite avec du chlorure de n-butyle et on sèche.

On détermine comme précédemment le spectre d'absorption et le spectre d'émission du matériau ainsi obtenu. Les courbes 3 des figures 1 et 2 représentent les résultats obtenus.

### Exemple 4

Cet exemple illustre la préparation d'un matériau luminescent dont la matrice est constituée par du polyméthacrylate de méthyle et qui contient du DMABN. On part d'un film de polyméthacrylate de méthyle vendu sous la marque Plexiglass ayant une épaisseur de 15 mm et on introduit le DMABN dans ce film par adsorption à partir d'une solution de chlorure de n-butyle contenant 10-² mol - 1-1 de DMABN, puis on évapore le solvant.

On lave ensuite le film avec du chlorure de n-butyle et on le sèche avant utilisation. On détermine alors le spectre d'absorption et le spectre d'émission comme dans l'exemple 1. Les courbes 4 des figures 1 et 2 illustrent les résultats obtenus.

Au vu de la figure 1, on constate que le spectre d'absorption du DMABN est déplacé d'au plus 1 000 cm-' lorsqu'on utilise des matrices en matière plastique ne comportant pas de liaisons hydrogène, ce qui peut s'expliquer par l'effet de la polarité de la matrice qui croît du polyéthylène au polyméthacrylate de méthyle et au chlorure de polyvinyle. En revanche, dans le cas de la matrice en alcool polyvinylique qui présente une polarité plus faible que le chlorure de polyvinyle, on obtient un déplacement du spectre plus important, ce qui démontre qu'il existe un effet supplémentaire dû à la matrice, qui résulte de la présence des liaisons hydrogène. Ceci est d'ailleurs confirmé par le fait que si l'on détermine le spectre d'absorption à 80 °C, c'est-à-dire lorsque la matrice d'alcool polyvinylique est ramollie, celui-ci devient analogue à celui obtenu avec le chlorure de polyvinyle à température ambiante en raison du fait que la liaison hydrogène a été rompue à cette température relativement élevée.

Sur la figure 2, on voit que les spectres d'émission du composé DMABN dans des matrices en polyéthylène, en chlorure de polyvinyle et en polyméthacrylate de méthyle (courbes 2, 3 et 4) présentent une fluorescence normale qui est déplacée de 350 à 365 nm, ce qui provient de la polarité différente des matrices.

En revanche, dans le cas d'une matrice en alcool polyvinylique (courbe 1), le spectre de fluorescence présente une double fluorescence Fb et Fa et la fluorescence Fa provenant d'un état TICT est très intense comparée à la fluorescence Fb, et d'une durée de vie très grande (plusieurs secondes).

Par ailleurs, on a vérifié que le rapport d'intensité l_{Fb}/I_{Fa}, est indépendant de la concentration en DMABN de la matrice sur un large intervalle de concentrations allant de 10-² à 10―⁶ mol - 1-1. Ainsi, l'intensité de fluorescence n'est pas due à la concentration du composé organique, mais à la présence d'une liaison hydrogène entre le composé et la matrice d'alcool polyvinylique.

A basse température, la double fluorescence disparaît et à la température de l'azote liquide on obtient seulement la fluorescence normale Fb et la phosphorescence, ce qui correspond aux résultats obtenus en solution.

Ainsi, la fluorescence Fa dépend surtout de la présence d'une liaison hydrogène et pas seulement des interactions dipôle-dipôle. En effet, le matériau comportant la matrice la plus polaire (chlorure de polyvinyle) ne présente pas la fluorescence Fa due à l'effet TICT.

### Exemple 5

Cet exemple se rapporte à la préparation d'un matériau comportant une matrice de polyamide 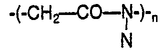 contenant du DMABN. On part de pastilles de polyamide telles que le produit vendu sous la marque Nylon Technyl 66 d'une épaisseur de l'ordre de 0,5 mm et on les immerge pendant une nuit dans une solution de chlorure de n-butyle contenant 10-³ mol - 1-¹ de DMABN. Après avoir retiré les pastilles de la solution, on les sèche, puis on les lave au chlorure de n-butyle et on les sèche.

On détermine alors le spectre d'émission du matériau obtenu, lorsque celui-ci est excité par un faisceau lumineux ayant une longueur d'onde de 310 nm.

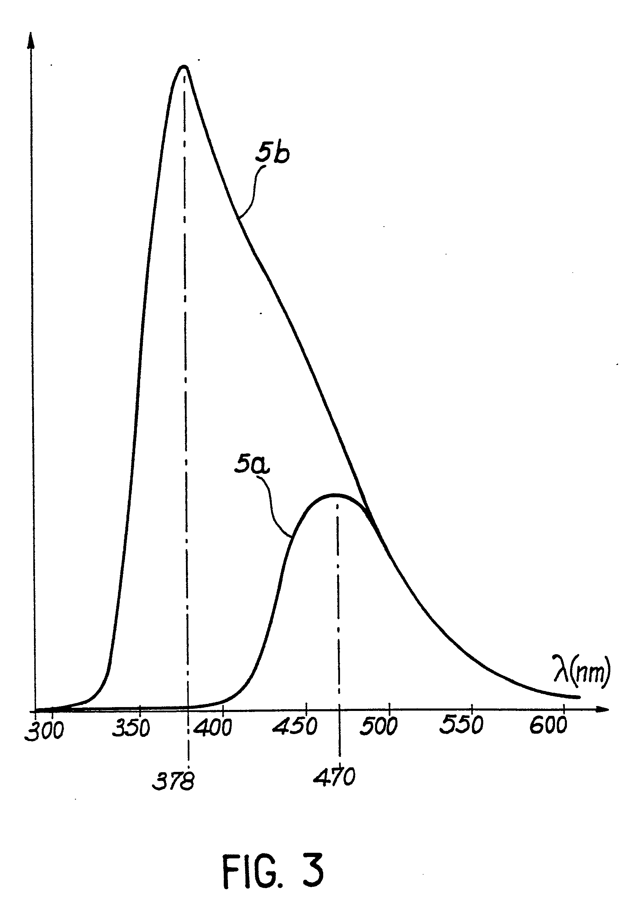

Les résultats obtenus sont donnés sur la figure 3, sur laquelle les courbes 5a et 5b illustrent respectivement les spectres d'émission correspondant à la fluorescence Fb (courbe 5b) et la fluorescence Fa (courbe 5a). La courbe qui correspond à la fluorescence Fa a été obtenue par résolution au phosphoroscope pour isoler le spectre d'émission de longue durée de vie.

### Exemple 6

Cet exemple se rapporte à la préparation d'un matériau comportant une matrice d'alcool polyvinylique comme dans les exemples 1 à 4 qui contient du N,N-diméthylamino-1 cyano-4 naphtalène, soit le composé n° 15.

On mélange 90 cm³ d'eau et 10 cm³ d'éthanol contenant 10-² mol. 1-1 de ce composé et on porte à l'ébullition ; on ajoute alors 10 g d'alcool polyvinylique constitué par le produit vendu sous la marque Rhodoviol 33S par la Société Rhône-Poulenc et on maintient l'ébullition tout en agitant pendant 20 min. On étend ensuite la solution au pinceau sur un substrat en verre et on laisse sécher pendant une heure, ce qui conduit à l'obtention d'une couche de matériau luminescent ayant une épaisseur d'environ 50 µm.

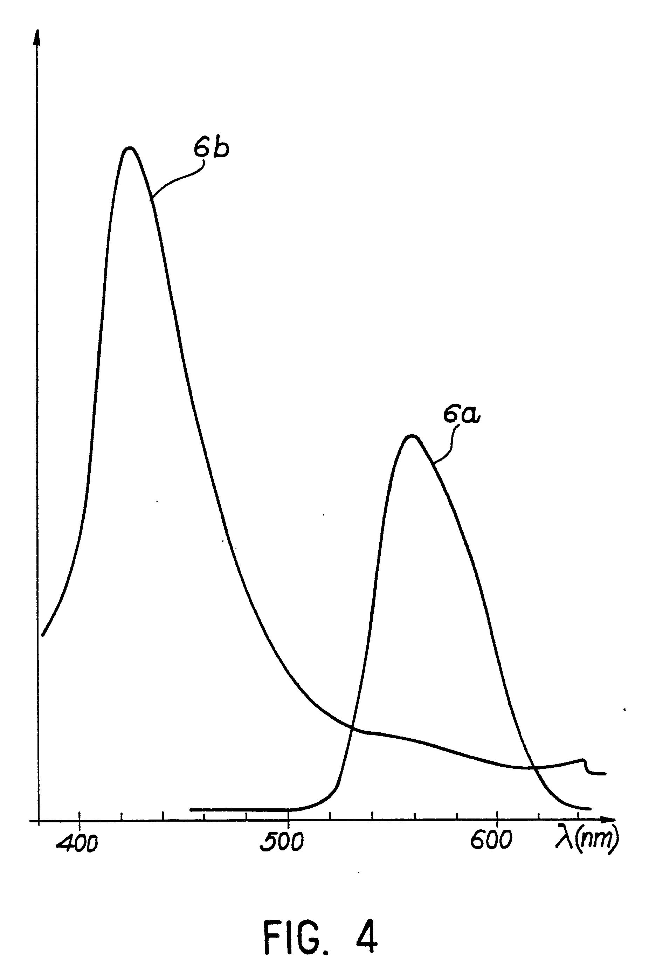

On détermine ensuite le spectre d'émission de ce matériau en l'irradiant par un faisceau lumineux d'une longueur d'onde de 360 à 380 nm. Les résultats obtenus sont donnés sur la figure 4 où la courbe 6b correspond à la première émission Fb dans le bleu à 420 nm et la courbe 6a à la seconde émission de fluorescence Fa à 500 nm (jaune), qui dure plusieurs secondes.

On a également vérifié les propriétés photoconductrices des matériaux luminescents conformes à l'invention. Pour vérifier ces propriétés, on dispose un film du matériau de l'invention déposé sur un substrat entre deux grillages métalliques sur lesquels on applique une tension continue qui peut aller de 0 à 500 V. Lorsqu'on éclaire le film avec une lumière présentant une longueur d'onde qui correspond à la bande d'absorption du composé organique, on détecte un photocourant.

Lorsque le film est constitué d'alcool polyvinylique contenant du DMABN, ayant une épaisseur de 20 µm, on détecte un courant qui peut aller jusqu'à 300 mA lorsque la tension monte jusqu'à 500 V.

En revanche, si l'épaisseur du film est de 2 mm, le courant détecté est au plus d'1 mA.

Les matériaux de l'invention présentent aussi la particularité de pouvoir être utilisés dans des dispositifs convertisseurs d'énergie tels que des photopiles. Dans ce cas, il est nécessaire d'orienter les molécules du composé organique dans la matrice en polymère ou copolymère et ceci peut être effectué comme on l'a vu précédemment en disposant le film avant séchage dans un champ électrique. Dans ce cas, on dispose le film dans lequel les molécules du composé organique ont été orientées, entre deux électrodes branchées sur un circuit externe, et lorsqu'on éclaire le film au moyen d'un rayonnement présentant une longueur d'onde qui correspond à la bande d'absorption du composé organique, on produit un courant électrique dans le circuit externe.

Dans le cas du DMABN dans une matrice d'alcool polyvinylique, on peut obtenir un courant de 0,06 µA lorsqu'on éclaire par un faisceau ayant une longueur d'onde de 310 nm.

## Revendications

1. Matériau luminescent comprenant une matrice dans laquelle est réparti un composé organique susceptible de présenter par torsion interne un état excité à transfert de charge, caractérisé en ce que ladite matrice est une matrice solide comportant des groupements capables de former des liaisons hydrogène et en ce qu'il comprend au moins 15.10―5%en poids dudit composé organique.

2. Matériau selon la revendication 1 caractérisé en ce que le composé organique répond à la formule : 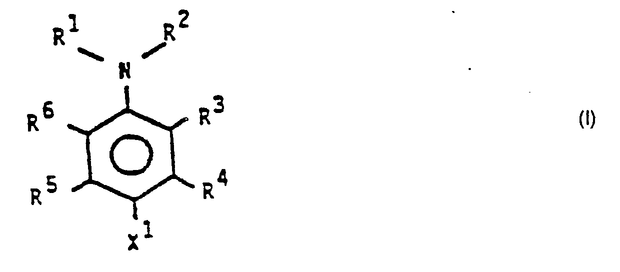 dans laquelle R¹ et R² qui peuvent être identiques ou différents, représentent un radical alkyle de 1 à 4 atomes de carbone ; R³, R⁴, R⁵ et R⁶ qui peuvent être identiques ou différents, représentent un atome d'hydrogène, un atome d'halogène, un radical alkyle de 1 à 4 atomes de carbone ou un radical alcoxy de 1 à 4 atomes de carbone ; et X¹ représente -C=N, -COOR, 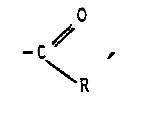 -N0₂ ou 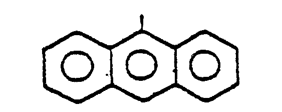 avec R représentant un atome d'hydrogène ou un radical alkyle de 1 à 4 atomes de carbone ; ou dans laquelle N, R¹ et R² forment ensemble un radical cyclique choisi parmi : 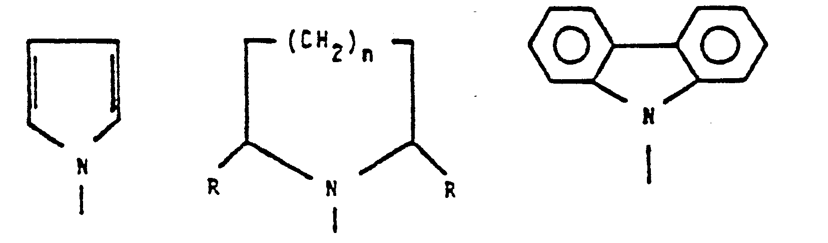 avec R représentant un atome d'hydrogène ou un radical alkyle de 1 à 4 atomes de carbone et n étant égal à 2 ou 3.

3. Matériau selon la revendication 2, caractérisé en ce que le composé organique est le para N,N-diméthylaminobenzonitrile (DMABN).

4. Matériau selon la revendication 1 caractérisé en ce que le composé organique répond à la formule : 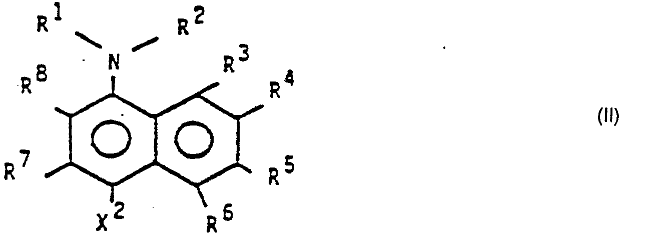 dans laquelle R¹ et R² qui peuvent être identiques ou différents, représentent un radical alkyle de 1 à 4 atomes de carbone ; R³, R⁴, R⁵, R⁶, R⁷ et R⁸ qui peuvent être identiques ou différents, représentent un atome d'hydrogène, un atome d'halogène, un radical alkyle de 1 à 4 atomes de carbone ou un radical alcoxy de 1 à 4 atomes de carbone ; et X² représente un atome d'hydrogène, ―CN. ―COOR. 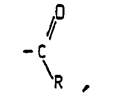 -N0₂ ou 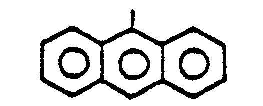 avec R représentant un atome d'hydrogène ou un radical alkyle de 1 à 4 atomes de carbone ; ou dans laquelle N, R¹ et R² peuvent aussi former ensemble un radical cyclique choisi parmi : 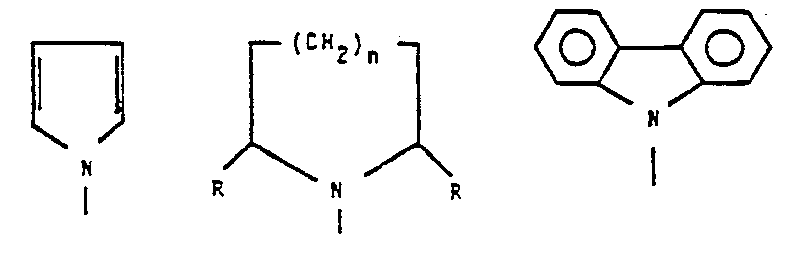 avec R représentant un atome d'hydrogène ou un radical alkyle de 1 à 4 atomes de carbone et n étant égal à 2 ou 3, à condition que X² ne soit pas l'hydrogène lorsque R¹ et R² sont des alkyles.

5. Matériau selon la revendication 4, caractérisé en ce que le composé organique est le N,N-diméthylamino-1 cyano-4 naphtalène.

6. Matériau selon la revendication 1, caractérisé en ce que le composé organique répond à la formule : 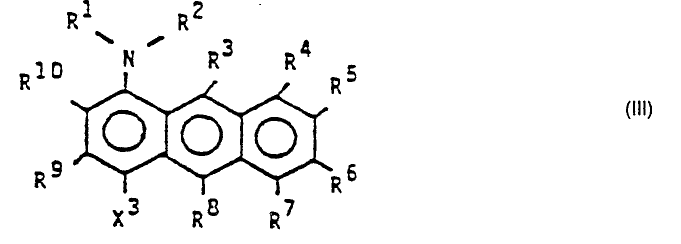 dans laquelle R¹ et R² qui peuvent être identiques ou différents, représentent un radical alkyle de 1 à 4 atomes de carbone; R³, R⁴, R⁵, R⁶, R⁷, R⁸, R⁹ et R¹⁰ qui peuvent être identiques ou différents, représentent un atome d'hydrogène, un atome d'halogène, un radical alkyle de 1 à 4 atomes de carbone ou un radical alcoxy de 1 à 4 atomes de carbone ; et X³ représente un atome d'hydrogène ―CN. ―COOR, 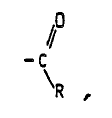 -N0₂ OU 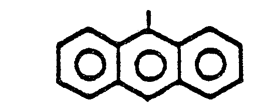 avec R représentant un atome d'hydrogène ou un radical alkyle de 1 à 4 atomes de carbone ; ou dans laquelle N, R¹ et R² peuvent former ensemble un radical cyclique choisi parmi : 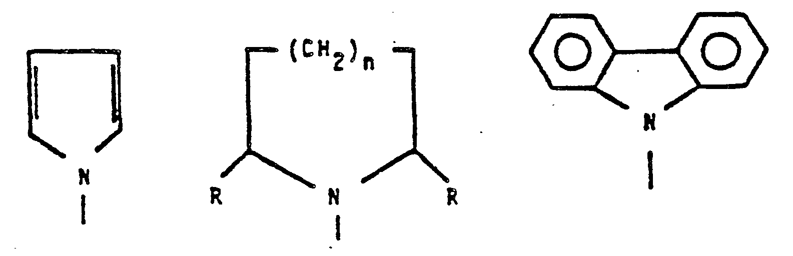 avec R représentant un atome d'hydrogène ou un radical alkyle de 1 à 4 atomes de carbone et n étant égal à 2 ou 3 à condition que X³ ne soit pas l'hydrogène lorsque R¹ et R² sont des alkyles.

7. Matériau selon la revendication 1, caractérisé en ce que le composé organique répond à la formule : 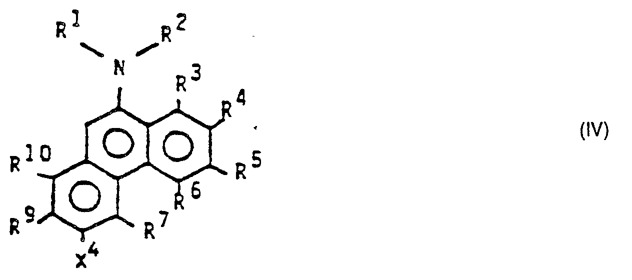 dans laquelle R' et R² qui peuvent être identiques ou différents représentent un radical alkyle de 1 à 4 atomes de carbone ; R³, R⁴, R⁵, R⁶, R⁷, R⁹ et R¹⁰ représentent un atome d'hydrogène, un atome d'halogène, un radical alkyle de 1 à 4 atomes de carbone ou un radical alcoxy de 1 à 4 atomes de carbone ; X⁴ représente un atome d'hydrogène ―CN. -COOR, 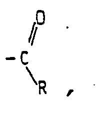 ou N0₂ avec R représentant l'hydrogène ou un radical alkyle de 1 à 4 atomes de carbone ; ou dans laquelle N, R¹ et R² forment ensemble un radical cyclique choisi parmi : 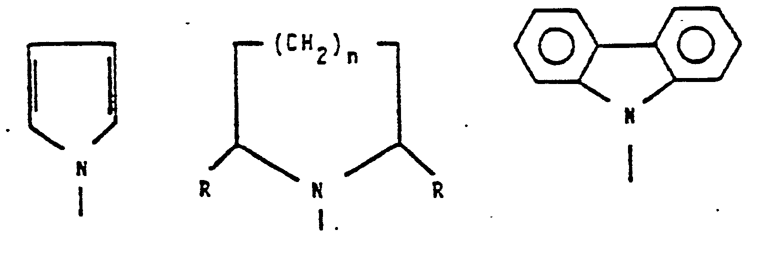 avec R représentant l'hydrogène ou un radical alkyle de 1 à 4 atomes de carbone et n étant égal à 2 ou 3, à condition que X⁴ ne soit pas l'hydrogène lorsque R' et R² sont des alkyles.

8. Matériau selon l'une quelconque des revendications 1 à 7, caractérisé en ce que tout ou partie des atomes d'hydrogène du composé organique sont remplacés par des atomes de deutérium.

9. Matériau selon l'une quelconque des revendications 1 à 8, caractérisé en ce que la matrice est en polymère ou copolymère comportant des groupements -SH, -NH ou -OH.

10. Matériau selon l'une quelconque des revendications 1 à 8, caractérisé en ce que la matrice est en verre.

11. Matériau selon la revendication 9, caractérisé en ce que le polymère est un alcool polyvinylique ou une polyamide.

12. Matériau selon l'une quelconque des revendications 1 à 11, caractérisé en ce qu'il comprend des traces d'au moins un composé choisi dans le groupe comprenant l'eau lourde, les iodures d'alkyle et les solvants polaires.

13. Procédé de préparation d'un matériau selon l'une quelconque des revendications 1 à 12, caractérisé en ce que l'on ajoute le composé organique lors de la préparation de la matrice.

14. Procédé de préparation d'un matériau selon l'une quelconque des revendications 9 et 11, caractérisé en ce qu'il consiste :
a) à préparer une solution du polymère ou copolymère formant la matrice et du composé organique par dissolution dans un solvant,
b) à mettre la solution sous la forme d'un film par dépôt sur un support, et
c) à sécher le film ainsi déposé pour évaporer le solvant.

15. Procédé selon la revendication 14, caractérisé en ce que la solution comprend de l'eau et un solvant organique miscible à l'eau.

16. Procédé selon l'une quelconque des revendications 13 à 15, caractérisé en ce que l'on oriente les molécules du composé organique dans la matrice.

17. Application du matériau selon l'une quelconque des revendications 1 à 12 dans une photopile.

## Claims

1. Luminescent material comprising a matrix in which there is distributed an organic compound capable of exhibiting, owing to internal torsion, an excited state with charge transfer, characterized in that the said matrix is a solid matrix including groups capable of forming hydrogen bonds and in that it comprises at least 15 x 10-⁵ % by weight of the said organic compound.

2. Material according to Claim 1, characterized in that the organic compound corresponds to the formula : 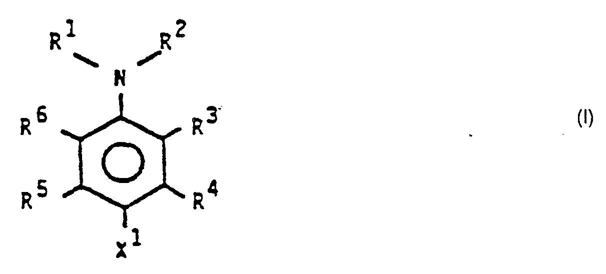 in which R¹ and R², which may be identical or different, denote an alkyl radical containing from 1 to 4 carbon atoms ; R³, R⁴, R⁵ and R⁶, which may be identical or different, denote a hydrogen atom, a halogen atom, an alkyl radical containing from 1 to 4 carbon atoms or an alkoxy radical containing from 1 to 4 carbon atoms ; and X¹ denotes ―C≡N, -COOR, 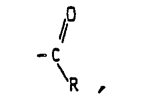 NO₂ or 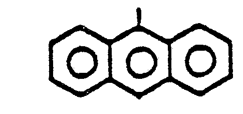 with R denoting a hydrogen atom or an alkyl radical containing from 1 to 4 carbon atoms ; or in which N, R¹ and R² form together a cyclic radical chosen from : 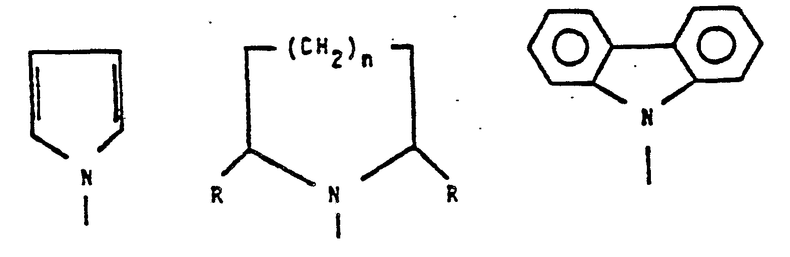 with R denoting a hydrogen atom or an alkyl radical containing from 1 to 4 carbon atoms and n being equal to 2 or 3.

3. Material according to Claim 2, characterized in that the organic compound is para-N,N-dimethylaminobenzonitrile (DMABN).

4. Material according to Claim 1, characterized in that the organic compound corresponds to the formula : 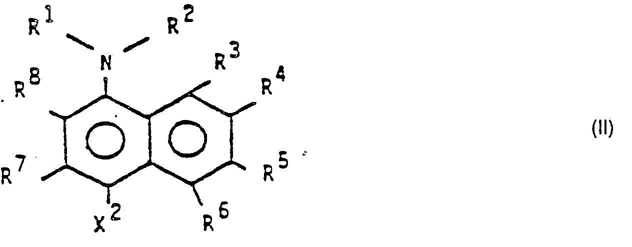 in which R¹ and R², which may be identical or different, denote an alkyl radical containing from 1 to 4 carbon atoms ; R³, R⁴, R⁵, R⁶, R⁷ and R⁸, which may be identical or different, denote a hydrogen atom, a halogen atom, an alkyl radical containing from 1 to 4 carbon atoms or an alkoxy radical containing from 1 to 4 carbon atoms ; and X² denotes a hydrogen atom, ―CN, ―COOR. 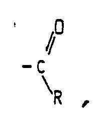 -N0₂ or 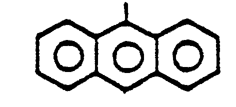 with R denoting a hydrogen atom or an alkyl radical containing from 1 to 4 carbon atoms ; or in which N, R¹ and R² can also form together a cyclic radical chosen from : 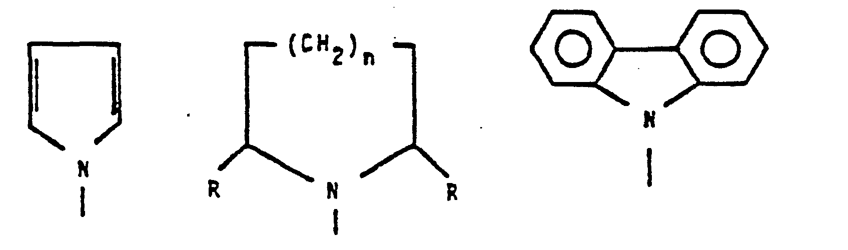 with R denoting a hydrogen atom or an alkyl radical containing from 1 to 4 carbon atoms and n being equal to 2 or 3, provided that X² is not hydrogen when R¹ and R² are alkyls.

5. Material according to Claim 4, characterized in that the organic compound is 1-N,N-di- methylamino-4-cyanonaphthalene.

6. Material according to Claim 1, characterized in that the organic compound corresponds to the formula : 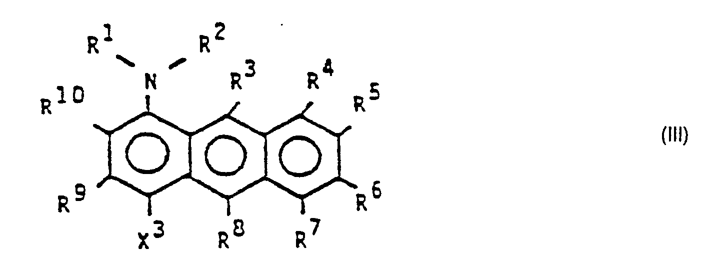 in which R¹ and R², which may be identical or different, denote an alkyl radical containing from 1 to 4 carbon atoms ; R³, R⁴, R⁵, R⁶, R⁷, R⁸, R⁹ and R¹⁰, which may be identical or different, denote a hydrogen atom, a halogen atom, an alkyl radical containing from 1 to 4 carbon atoms or an alkoxy radical containing from 1 to 4 carbon atoms ; and X³ denotes a hydrogen atom -CN, -COOR, 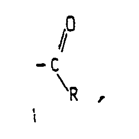 -N0₂ or 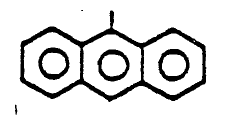 with R denoting a hydrogen atom or an alkyl radical containing from 1 to 4 carbon atoms ; or in which N, R¹ and R² can form together a cyclic radical chosen from : 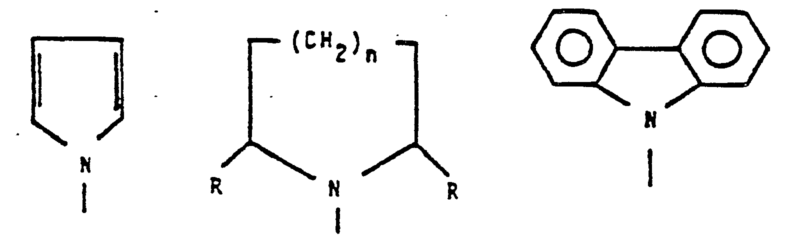 with R denoting a hydrogen atom or an alkyl radical containing from 1 to 4 carbon atoms and n being equal to 2 or 3 provided that X³ is not hydrogen when R¹ and R² are alkyls.

7. Material according to Claim 1, characterized in that the organic compound corresponds to the formula : 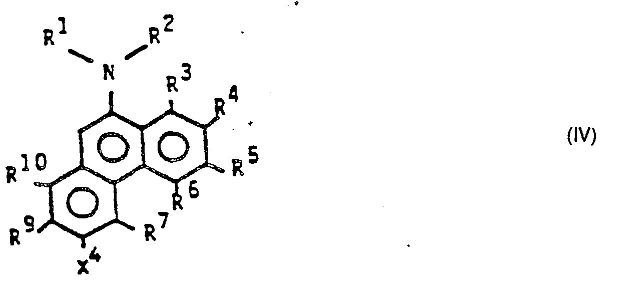 in which R¹ and R², which may be identical or different denote an alkyl radical containing from 1 to 4 carbon atoms ; R³, R⁴, R⁵, R⁶, R⁷, R⁹ and R¹⁰denote a hydrogen atom, a halogen atom, an alkyl radical containing from 1 to 4 carbon atoms or an alkoxy radical containing from 1 to 4 carbon atoms ; X⁴ denotes a hydrogen atom -CN, -COOR, 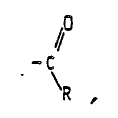 or N0₂ with R denoting hydrogen or an alkyl radical containing from 1 to 4 carbon atoms ; or in which N, R¹ and R² form together a cyclic radical chosen from : 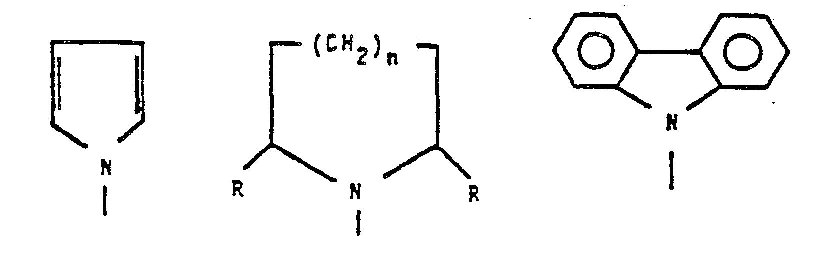 with R denoting hydrogen or an alkyl radical containing from 1 to 4 carbon atoms and n being equal to 2 or 3, provided that X⁴ is not hydrogen when R¹ and R² are alkyls.

8. Material according to any one of Claims 1 to 7, characterized in that all or a part of the hydrogen atoms in the organic compound are replaced by deuterium atoms.

9. Material according to any one of Claims 1 to 8, characterized in that the matrix is made of a polymer or copolymer containing -SH, -NH or -OH groups.

10. Material according to any one of Claims 1 to 8, characterized in that the matrix is made of glass.

11. Material according to Claim 9, characterized in that the polymer is a polyvinyl alcohol or a polyamide.

12. Material according to any one of Claims 1 to 11, characterized in that it comprises traces of at least one compound chosen from the group comprising heavy water, alkyl iodides and polar solvents.

13. Process for the preparation of a material according to any one of Claims 1 to 12, characterized in that the organic compound is added during the preparation of the matrix.

14. Process for the preparation of a material according to either of Claims 9 and 11, characterized in that it consists :
a) in preparing a solution of the polymer or copolymer forming the matrix and of the organic compound by dissolving in a solvent,
b) in converting the solution into the form of a film by deposition on a substrate, and
c) in drying the film deposited in this manner to evaporate the solvent.

15. Process according to Claim 14, characterized in that the solution comprises water and a water- miscible organic solvent.

16. Process according to any one of Claims 13 to 15, characterized in that the molecules of the organic compound are oriented in the matrix.

17. Application of the material according to any one of Claims 1 to 12 in a photopile.

## Patentansprüche

1. Lumineszentes Material mit einer Matrix, in der eine organische Verbindung verteilt ist, die durch innere Torsion einen angeregten Ladungsübertragungszustand aufweisen kann, dadurch gekennzeichnet, daß die Matrix eine Feststoff-Matrix ist; die zur Bildung von Wasserstoffbindungen befähigte Gruppen umfaßt und mindestens 15 x· 10-5 Gew.-% der organischen Verbindung beinhaltet.

2. Material nach Anspruch 1, dadurch gekennzeichnet, daß die organische Verbindung der Formel : 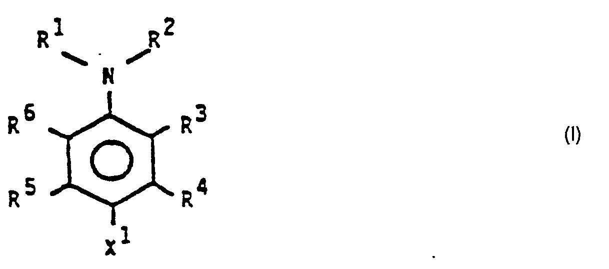 entspricht, worin bedeuten : R^{l} und R², die gleich oder verschieden sein können, einen Alkylrest mit 1 bis 4 Kohlenstoffatomen ; R³, R⁴, R⁵ und R⁶, die gleich oder verschieden sein können, ein Wasserstoffatom, Halogenatom, einen Alkylrest mit 1 bis 4 Kohlenstoffatomen oder einen Alkoxyrest mit 1 bis 4 Kohlenstoffatomen ; und
X¹ ―C≡N, -COOR, 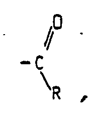
-N0₂ oder 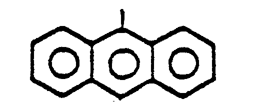 worin R ein Wasserstoffatom oder einen Alkylrest mit 1 bis 4 Kohlenstoffatomen bedeutet ; oder worin N, R' und R² zusammen einen zyklischen Rest bilden, gewählt aus : 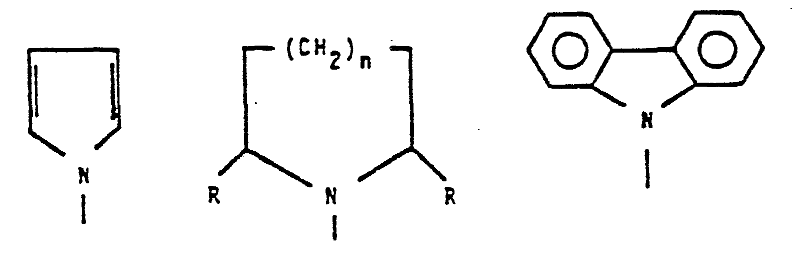 worin R ein Wasserstoffatom oder einen Alkylrest mit 1 bis 4 Kohlenstoffatomen bedeutet und n gleich 2 oder 3 ist.

3. Material nach Anspruch 2, dadurch gekennzeichnet, daß die organische Verbindung para-N,N-Dimethylaminobenzonitril (DMABN) ist.

4. Material nach Anspruch 1, dadurch gekennzeichnet, daß die organische Verbindung der Formel : 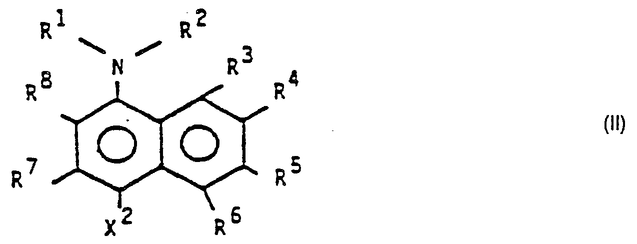 entspricht, worin bedeuten : R^{l} und R², die gleich oder verschieden sein können, einen Alkylrest mit 1 bis 4 Kohlenstoffatomen ; R³, R⁴, R⁵, R⁶, R⁷ und R⁸, die gleich oder verschieden sein können, ein Wasserstoffatom, Halogenatom, einen Alkylrest mit 1 bis 4 Kohlenstoffatomen oder einen Alkoxyrest mit 1 bis 4 Kohlenstoffatomen ; und X² ein Wasserstoffatom, -CN, -COOR, 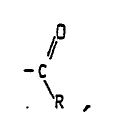 ―NO₂ oder 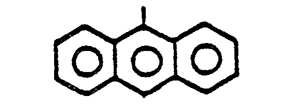 worin R ein Wasserstoffatom oder einen Alkylrest mit 1 bis 4 Kohlenstoffatomen bedeutet ; oder worin N, R¹ und R² ebenso zusammen einen zyklischen Rest bilden können, gewählt aus : 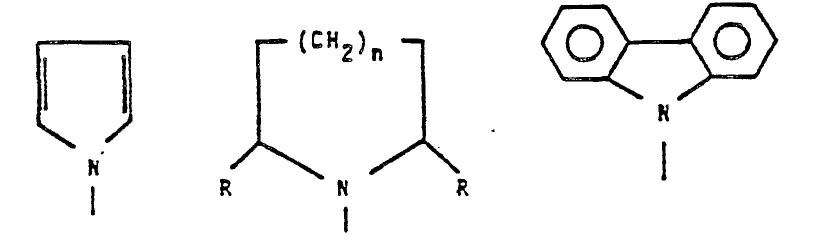 worin R ein Wasserstoffatom oder einen Alkylrest mit 1 bis 4 Kohlenstoffatomen bedeutet und n 2 oder 3 ist, mit der Maßgabe, daß X² nicht Wasserstoff ist, wenn R¹ und R² Alkylgruppen darstellen.

5. Material nach Anspruch 4, dadurch gekennzeichnet, daß die organische Verbindung 1-N,N-Dimethylamino-4-cyanonaphthalin ist.

6. Material nach Anspruch 1, dadurch gekennzeichnet, daß die organische Verbindung der Formel : 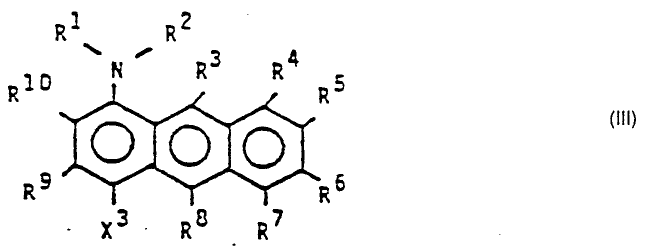 entspricht, worin bedeuten : R^{I} und R², die gleich oder verschieden sein können, einen Alkylrest mit 1 bis ₄ Kohlenstoffatomen ; R³, R⁴, R⁵, R⁶, R⁷, R⁸, R⁹ und R¹⁰, die gleich oder verschieden sein können, ein Wasserstoffatom, Halogenatom, einen Alkylrest mit 1 bis 4 Kohlenstoffatomen oder einen Alkoxyrest mit 1 bis 4 Kohlenstoffatomen ; und X³ ein Wasserstoffatom, -CN, -COOR, 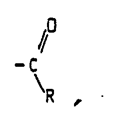 -N0₂ oder 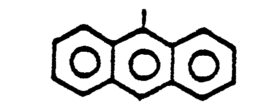 worin R ein Wasserstoffatom oder einen Alkylrest mit 1 bis 4 Kohlenstoffatomen bedeutet ; oder worin N, R¹ und R² zusammen einen zyklischen Rest bilden können, gewählt aus : 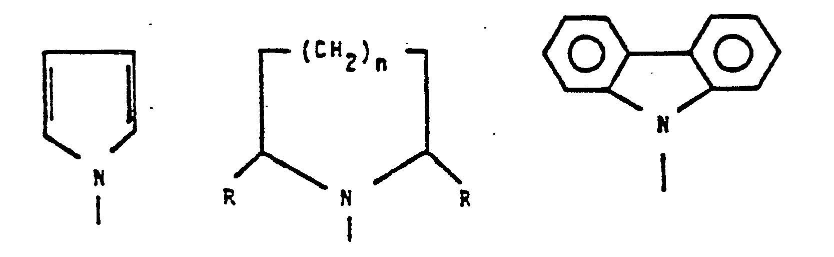 worin R ein Wasserstoffatom oder einen Alkylrest mit 1 bis 4 Kohlenstoffatomen bedeutet und n gleich 2 oder 3 ist, mit der Maßgabe, daß X³ nicht Wasserstoff ist, wenn R¹ und R2 Alkylgruppen darstellen.

7. Material nach Anspruch 1, dadurch gekennzeichnet, daß die organische Verbindung der Formel : 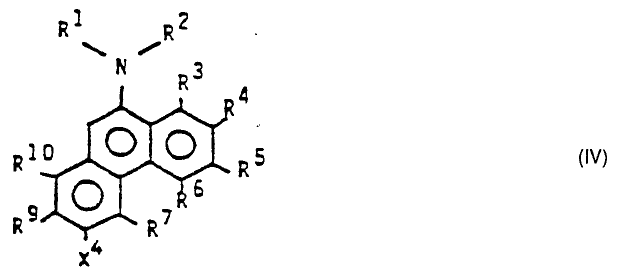 entspricht, worin bedeuten : R¹ und R², die gleich oder verschieden sein können, einen Alkylrest mit 1 bis 4 Kohlenstoffatomen ; R³, R⁴, R⁵, R⁶, R⁷, R⁹ und R¹⁰ ein Wasserstoffatom, Halogenatom, einen Alkylrest mit 1 bis 4 Kohlenstoffatomen oder einen Alkoxyrest mit 1 bis 4 Kohlenstoffatomen ; X⁴ ein Wasserstoffatom, -CN, -COOR, 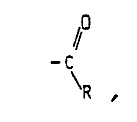 oder N0₂, worin R ein Wasserstoffatom oder einen Alkylrest mit 1 bis 4 Kohlenstoffatomen bedeutet ; oder worin N, R¹ und R² zusammen einen zyklischen Rest bilden, gewählt aus : 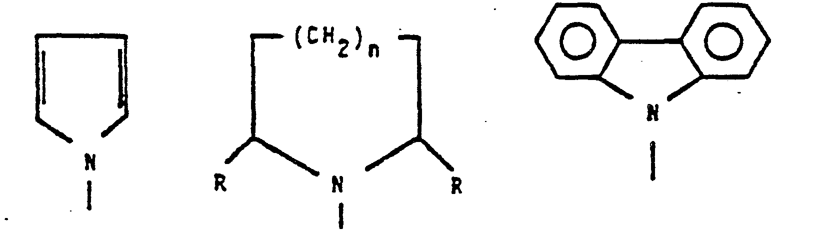 worin R Wasserstoff oder einen Alkylrest mit 1 bis 4 Kohlenstoffatomen bedeutet und n gleich 2 oder 3 ist, mit der Maßgabe, daß X⁴ nicht Wasserstoff ist, wenn R¹ und R² Alkylgruppen darstellen.

8. Material nach einem der Ansprüche 1 bis 7, dadurch gekennzeichnet, daß sämtliche oder ein Teil der Wasserstoffatome der organischen Verbindung durch Deuteriumatome ersetzt sind bzw. ist.

9. Material nach einem der Ansprüche 1 bis 8, dadurch gekennzeichnet, daß die Matrix ein Polymer oder Copolymer ist, das die Gruppen ―SH, -NH oder ―OH enthält.

10. Material nach einem der Ansprüche 1 bis 8, dadurch gekennzeichnet, daß die Matrix aus Glas ist.

11. Material nach Anspruch 9, dadurch gekennzeichnet, daß das Polymer ein Polyvinylalkohol oder ein Polyamid ist.

12. Material nach einem der Ansprüche 1 bis 11, dadurch gekennzeichnet, daß es Spuren wenigstens einer Verbindung, gewählt aus der Gruppe schweres Wasser, Alkyljodide und polare Lösungsmittel, beinhaltet.

13. Verfahren zur Herstellung eines Materials nach einem der Ansprüche 1 bis 12, dadurch gekennzeichnet, daß man die organische Verbindung bei der Herstellung der Matrix zugibt.

14. Verfahren zur Herstellung eines Materials nach einem der Ansprüche 9 und 11, dadurch gekennzeichnet, daß es besteht aus :
a) der Herstellung einer Lösung des die Matrix bildenden Polymeren oder Copolymeren und der organischen Verbindung durch Auflösung in einem Lösungsmittel,
b) dem Aufbringen der Lösung in Form eines Beschichtungsfilmes auf einen Träger und
c) dem Trocknen des so aufgebrachten Filmes, um das Lösungsmittel zu verdampfen.

15. Verfahren nach Anspruch 14, dadurch gekennzeichnet, daß die Lösung Wasser und ein mit Wasser mischbares, organisches Lösungsmittel umfaßt.

16. Verfahren nach einem der Ansprüche 13 bis 15, dadurch gekennzeichnet, daß man die Moleküle der organischen Verbindung in der Matrix ausrichtet.

17. Verwendung des Materials nach einem der Ansprüche 1 bis 12 in einer Photozelle.
